# EUROPÄISCHE PATENTSCHRIFT

(11) **EP 0 624 633 B1**
(45) Veröffentlichungstag und Bekanntmachung des Hinweises auf die Patenterteilung: **22.10.1997**
(21) Anmeldenummer: 94106961.9
(22) Anmeldetag: 04.05.1994
(51) Int. Cl.: C09D 143/04, C08F 220/12, C09J 143/04

(54) **Durch Einwirkung von Luftfeuchtigkeit selbsthärtende Copolymere und Mischungen**
Copolymers self-crosslinking by contact with humidity and blends
Copolymères autoréticulables par l'humidité de l'air et mélanges

(30) Priorität: 12.05.1993 DE 4315880
(43) Veröffentlichungstag der Anmeldung: 17.11.1994
(73) Patentinhaber: BASF Aktiengesellschaft, 67063 Ludwigshafen (DE)
(72) Erfinder: Barwich, Juergen, Dr., D-67434 Neustadt (DE); Plaumann, Heinz, Dr., Charlotte, N.C. 28277 (US); Wistuba, Eckehardt, Dr., D-67098 Bad Duerkheim (DE)

(56) Entgegenhaltungen:
- EP-A- 0 029 100
- EP-A- 0 387 587
- EP-A- 0 401 540

## Beschreibung

Die Erfindung betrifft im wesentlichen isocyanatfreie, ketimin- und aldiminfreie, einkomponentige, durch Einwirkung von Luftfeuchtigkeit selbsthärtende Dichtungs-, Klebstoff- oder Beschichtungsmassen, enthaltend ein Gemisch von Copolymeren, enthaltend
- 5 - 95 Gew.-%,: bezogen auf das Gemisch, eines Copolymeren B), aufgebaut aus
- 50 - 99,9 Gew.-%: eines C₁-C₁₆-Alkyl(meth)acrylats oder Vinylesters von Carbonsäuren mit 1 bis 20 C-Atomen a),
- 0 - 20 Gew.-%: eines ungesättigten Carbonsäureanhydrids b)
- 0,1 - 10 Gew.-%: einer zur Hydrolyse befähigten Si-enthaltenden Verbindung c) und
- 0 - 40 Gew.-%: einer weiteren, copolymerisierbaren ungesättigten Verbindung d)
und
- 5 - 95 Gew.-%,: bezogen auf das Gemisch, eines Copolymeren C), aufgebaut aus
- 50 - 99,9 Gew.-%: eines C₁-C₁₆-Alkyl(meth)acrylats oder Vinylesters von Carbonsäuren mit 1 bis 20 C-Atomen a),
- 0,1 - 20 Gew.-%: eines ungesättigten Carbonsäureanhydrids b)
- 0 - 10 Gew.-%: einer zur Hydrolyse befähigten Si-enthaltenden Verbindung c) und
- 0 - 40 Gew.-%: einer weiteren, copolymerisierbaren ungesättigten Verbindung d)
wobei der K-Wert gemessen nach DIN 53 726 eines der Copolymeren B) oder C) 12 bis 40 und der anderen Copolymeren 30 bis 70 beträgt und der K-Wert der beiden Copolymeren sich mindestens um 5 K-Wert-Einheiten unterscheidet.

Des weiteren betrifft die Erfindung unter Luftfeuchtigkeit selbsthärtende Gemische von Copolymeren.

Einkomponentige, durch Luftfeuchtigkeit selbsthärtende Dichtungsmassen werden in geschlossenen Behältern, z.B. Kartuschen aufbewahrt. Sie benötigen bei der Verwendung nicht den Zusatz einer 2. Komponente. Sobald der Behälter geöffnet wird bzw. die Dichtungsmasse aus der Kartusche gedrückt wird, beginnt die Selbsthärtung durch Einwirkung von Luftfeuchtigkeit.

Bisher bekannte durch Einwirkung von Luftfeuchtigkeit härtende Dichtungsmassen enthalten vielfältig Isocyanatverbindungen als Vernetzer. Nach der DE-A 39 13 168 können Isocyanate in Polymeren einpolymerisiert sein. Aus der DE-A 40 38 939 sind Gemische von Diisocyanaten bzw. Aldiminen oder Ketiminen mit Copolymerisaten, welche als Regler gebundene, hydrolysierbare Si-Verbindungen enthalten, als Dichtungsmassen bekannt.

Aus EP-A-387 587 sind unter Luftfeuchtigkeit härtende Dichtungsmassen, enthaltend Copolymere mit Maleinsäureanhydrid und Si-Verbindungen bekannt.

Nachteilig bei unter Luftfeuchtigkeit härtenden, Isocyanatverbindungen enthaltenden Dichtungsmassen ist eine zu beobachtende Vergilbung, sowie insbesondere die Entstehung von Kohlendioxid bei der Aushärtung. Durch Gaseinschlüsse werden die mechanischen Eigenschaften den ausgehärteten Dichtungsmassen verschlechtert. Des weiteren sind durch die Gasentwicklung Anwendungen, bei denen keine Volumenvergrößerung auftreten soll, ausgeschlossen.

Weitere, hydrolysierbare Si-Verbindungen enthaltende Copolymere, welche in Dichtungs- oder Beschichtungsmassen eingesetzt werden, sind aus der DE-A 39 07 991, DE-A 34 26 057 und EP-A 122 457 bekannt.

Generell sind Dichtungs-, bzw. Beschichtunsmassen erwünscht, die eine hohe Reißfestigkeit und ein gutes Rückstellungsvermögen nach Beanspruchung z.B. Dehnung aufweisen, nicht zur Vergilbung neigen und bei denen keine Gasentwicklung auftritt.

Aufgabe der Erfindung war daher, solche Massen zur Verfügung zu stellen.

Die Aufgabe wurde gelöst durch die oben definierten Massen.

Die Dichtungs-, Klebstoff- oder Beschichtungsmassen enthalten ein Gemisch von Copolymeren B) und C).

Die Copolymeren enthalten als Aufbaukomponenten C₁-C₁₆-Alkyl(meth)acrylate a), ungesättigte Carbonsäureanhydride b), eine zur Hydrolyse befähigte Si-enthaltende Verbindung c) und weitere einpolymerisierbare, ungesättigte Verbindungen d).

Bevorzugte Verbindungen a) sind C₁-C₁₆-, besonders bevorzugt C₁-C₈-Alkyl(meth)acrylate, wie Methyl(meth)acrylat, Ethyl(meth)acrylat, n- und iso-Propyl(meth)acrylat, n-Butyl(meth)acrylat und 2 Ethylhexyl(meth)acrylat. Neben den C₁-C₁₆-Alkyl(meth)acrylaten kommen als Verbindungen a) auch Vinylester von Carbonsäuren mit 1 bis 20 C-Atomen, wie Vinyllaurat, Vinylstearat, Vinylpropionat und insbesondere Vinylacetat, sowie deren Mischungen mit C₁-C₁₆-Alkyl(meth)acrylaten in Betracht.

Ungesättigte Carbonsäureanhydride b) haben vorzugsweise 4 bis 8, besonders bevorzugt 4 oder 5 C-Atome. Zu nennen sind z.B. Maleinsäureanhydrid, Itaconsäureanhydrid und Citraconsäuredianhydrid und auch Cyclohexendicarbonsäureanhydrid.

Bei den zur Hydrolyse befähigten Si-enthaltenden Verbindungen handelt es sich vorzugsweise um Verbindungen der allgemeinen Formel I 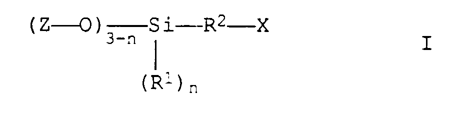 oder 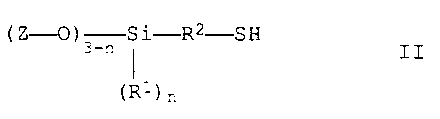 oder deren Gemische, wobei
R¹ für eine C₁-C₁₈-, vorzugsweise C₁-C₆-Alkylgruppe oder eine Phenylgruppe, R² für eine C₁-C₁₈-, vorzugsweise eine C₁-C₆-Alkylengruppe, eine Cyclohexylengruppe oder Phenylengruppe, Z für eine C₁-C₁₈-, vorzugsweise C₁-C₆-Alkylgruppe oder eine Phenylgruppe, X für eine radikalisch copolymerisierbare Gruppe und n für 0, 1 oder 2 steht. X steht bevorzugt für einen (Meth)acryl-, (Meth)acrylamid- oder Vinylrest.

Genannt seien z.B. 3-Acryloxypropyltriethoxysilan, 3-Methacryloxypropylmethyldiethoxysilan, 3-Methacryloxypropyldimethylethoxysilan, 3-Methacryloxypropyltris-(2-methoxyethoxy)silan, Vinyltrimethoxysilan, Vinyltris(methoxyethoxy)silan und insbesondere (Meth)acryloxypropyltrimethoxysilan (MEMO), 3-Mercaptopropyltrimethoxysilan und 3-Mercaptopropyltriethoxysilan.

Verbindungen der Formel I werden als Monomer durch Copolymerisation mit der Gruppe X eingebaut.

Verbindungen der Formel II werden in der Polymerkette als Regler endständig eingebaut und bedingen durch ihre regelnde Wirkung eine Verminderung des Molekulargewichts und somit auch des K-Werts.

Verbindungen d) sind vinylaromatische Verbindungen wie Vinyltoluol, α- und p-Styrol, α-Butylstyrol, 4-n-Butylstyrol, 4-n-Butylstyrol, 4-n-Decylstyrol und vorzugsweise Styrol, Vinylhalogenide, bevorzugt Vinylchlorid und Vinylidenchlorid und nicht aromatische Kohlenwasserstoffe mit 2 bis 8 C-Atomen und mindestens zwei olefinischen Doppelbindungen wie Butadien, Isopren und Chloropren, sowie C₂-C₄-Olefine, z.B. Ethylen.

Der K-Wert ist eine relative Viskositätszahl, die entsprechend DIN 53 726 bei 25°C bestimmt wird. Er gibt die Fließgeschwindigkeit einer Mischung aus 0,01 g Polymer in 1 ml Tetrahydrofuran (THF), relativ zur Fließgeschwindigkeit von reinem THF an und charakterisiert den mittleren Polymerisationsgrad des Polymeren.

Die Glasübergangstemperatur T_{g} der Copolymeren B) und C) beträgt vorzugsweise -70 bis +20, besonders bevorzugt -50 bis +20 und ganz bevorzugt -40 bis -10°C. Oberhalb der T_{g} ist das Polymer flüssig.

Die Glasübergangstemperatur des Copolymeren läßt sich nach üblichen Methoden wie Differentialthermoanalyse oder Differential Scanning Calorimetrie (s. z.B. ASTM 3418/82, sog. "midpoint temperature") bestimmen.

Ein bevorzugtes Gemisch, enthaltend Copolymere B) und C), enthält
20 bis 80 Gew.-% Copolymer B) und
20 bis 80 Gew.-% Copolymer C).

Copolymer B) ist vorzugsweise aufgebaut aus
70 - 99,9 Gew.-% a),
0 - 10 Gew.-% b),
0,1 - 8 Gew.-% c) und
0 - 25 Gew.-% d).

Copolymer C) ist vorzugsweise aufgebaut aus
70 - 99 Gew.-% a),
0,1 - 12 Gew.-% b),
0 - 6 Gew.-% c) und
0 - 25 Gew.-% d).

Ganz besonders bevorzugt enthält Copolymer B) im wesentlichen keine Verbindung b) und Copolymer C) im wesentlichen keine Verbindung c).

Eins der beiden Copolymeren B) oder C) hat ein höheres Molekulargewicht, gekennzeichnet durch einen K-Wert von 30 bis 70, vorzugsweise 35 bis 55 und das jeweils andere Copolymer hat einen K-Wert von 12 bis 40, vorzugsweise 15 bis 30.

Ganz besonders bevorzugt hat Copolymer C) den höheren K-Wert.

Der K-Wert der beiden Copolymeren unterscheidet sich dabei um mindestens 5, vorzugsweise um mindestens 15 K-Wert-Einheiten.

Als Verbindungen c) können in den Copolymeren B) und C) solche der Formel I oder II oder deren Gemische eingesetzt werden.

Copolymere mit einem K-Wert von 30 und größer enthalten vorzugsweise copolymerisierbare Si-Verbindungen der Formel I.

Copolymerisate mit einem K-Wert unter 30 enthalten vorzugsweise regelnde Si-Verbindungen der Formel II oder Gemische von Si-Verbindungen der Formeln I und II mit mindestens 10 Gew.-%, vorzugsweise mindestens 40 Gew.-% der Verbindungen II, bezogen auf den Gesamtgehalt der Verbindungen c).

Die Herstellung der Copolymeren erfolgt durch radikalische Polymerisation, z.B. durch Polymerisation in Masse (lösungsmittelfrei) oder vorzugsweise in Lösung, im allgemeinen bei Temperaturen von 20 bis 120 vorzugsweise von 80 bis 120°C.

Die Lösungspolymerisation kann als Chargenprozeß oder in Form eines Zulaufverfahrens durchgeführt werden. Bevorzugt ist das Zulaufverfahren, bei dem man einen Teil des Polymerisationsansatzes vorlegt, auf die Polymerisationstemperatur erhitzt und anschließend den Rest kontinuierlich zuführt.

Als Lösungsmittel für die radikalische Lösungspolymerisation werden in der Regel Ether wie Tetrahydrofuran oder Dioxan, Ester wie Ethylacetat oder n-Butylacetat, Ketone wie Aceton oder Cyclohexanon, N,N-Dialkylcarbonsäureamide wie N,N-Dimethylformamid, N,N-Dimethylacetamid oder N-Methyl-2-pyrrolidon, Aromaten wie Toluol und Xylol, aliphatische Kohlenwasserstoffe wie Isooctan, chlorierte Kohlenwasserstoffe wie tert.-Butylchlorid oder Weichmacher wie Di-n-butylphthalat verwendet.

Zweckmäßigerweise arbeitet man in "wasserfreiem" Polymerisationsmedium, d.h. bei einem Wassergehalt von weniger als 100 ppm. Mit Vorteil wird die Lösungspolymerisation der an sich wasserfreien Reaktionsteilnehmer in Gegenwart geringer Mengen an Trocknungsmitteln wie Tetraalkoxysilanen, z.B. Tetramethoxysilan oder Orthoameisensäuretrialkylestern, z.B. Triethylorthoformiat, gegebenenfalls unter Zusatz einer Lewis-Säure, durchgeführt. Von den so erhältlichen Lösungen der Copolymeren kann das Lösungsmittel nach Bedarf, beispielsweise durch Destillation im Vakuum, teilweise oder vollständig abgetrennt werden.

Als bevorzugte Initiatoren sind Dibenzoylperoxid, tert.-Butylperpivalat, tert.-Butylper-2-ethylhexanoat, Di-tert.-butylperoxid, tert.-Butylhydroperoxid, Cumolhydroperoxid, Dilaurylperoxid, tert.-Butylperoximaleinat, tert.-Butylperoxibenzoat, Dicumylperoxid, Didecanoylperoxid, Methylethylketonperoxid, 2,2'-Azo-bis-(2,4-dimethylvaleronitril), 2,2'-Azobis-(2,3-dimethylbutyronitril) und 2,2'-Azobisisobutyronitril zu nennen. Daneben eignen sich silangruppentragende Azoinitiatoren (EP-A 159 710).

Das Gemisch, enthaltend Copolymer B) und C), wird vorzugsweise als Dichtungs-, Klebstoff- oder Beschichtungsmasse verwendet.

Dichtungs-, Klebstoff- und Beschichtungsmassen, welche als Polymerbasis ein Gemisch aus Copolymer B) und C) enthalten, sind vorzugsweise im wesentlichen frei von Isocyanatverbindungen, Ketiminen oder Aldiminen, wie sie z.B. in DE-A 40 38 939 erwähnt sind.

Die Dichtungs-, Klebstoff- und Beschichtungsmassen sind vorzugsweise einkomponentig, d.h. zur Härtung werden keine Zusätze benötigt. Die Härtung wird lediglich durch Einwirkung von Luftfeuchtigkeit bewirkt. Zur Beschleunigung der Härtung können jedoch Katalysatoren, insbesondere Dialkylzinndicarboxylate, z.B. Dibutylzinndilaurat den Massen in geringen Menge, im allgemeinen in Mengen von 0,05 - 2,0 Gew.-%, bezogen auf die Polymermasse, zugesetzt werden. Die Massen können weitere übliche Zusatzstoffe enthalten.

Vorzugsweise enthalten die Massen kein Lösungsmittel bzw. lediglich rückständige Lösungsmittelmengen aus der Herstellung der Copolymeren in Mengen unter 5 Gew.-%, vorzugsweise unter 1 Gew.-%, bezogen auf die Massen.

Bei der Abmischung der Bestandteile der Dichtungs-, Klebstoff- und Beschichtungsmassen muß ebenso wie bei der Herstellung der einzelnen Copolymere auf Ausschluß von Feuchtigkeit geachtet werden. Die Dichtungs-, Klebstoff- und Beschichtungsmassen werden vorzugsweise in einem abgedichteten Behälter z.B. Kartuschen gelagert.

Die erfindungsgemäßen Dichtungs-, Klebstoff- und Beschichtungsmassen härten unter Einwirkung von Luftfeuchtigkeit schnell aus.

Unter Feuchtigkeitsausschluß sind die Massen im allgemeinen länger als 6 Monate lagerstabil.

Die Massen werden in flüssigem Zustand, insbesondere bei Temperaturen von 10 bis 100°C verarbeitet. Sie können aufgetragen bzw. in Hohlräume gepreßt werden, danach tritt eine Härtung durch Einwirken von Luftfeuchtigkeit ein.

Als Substrate, die mit den Massen behandelt werden, kommen z.B. solche aus Kunststoff, Metall, Beton, Keramik oder Holz in Betracht.

Aufgrund ihrer erhöhten Elastizität im gehärteten Zustand werden die Massen insbesondere eingesetzt, um Risse im Untergrund zu überbrücken oder Dehnungsfugen auszufüllen. Im Außenbereich werden vorzugsweise erfindungsgemäße Massen auf Basis von Copolymeren mit einer Glastemperatur von -10 bis -40°C eingesetzt.

Die erfindungsgemäßen Dichtungsmassen zeichnen sich durch besonders gute Adhäsion auf Glas, Aluminium und Keramik aus. Sie sind ferner mit Lacken überstreichbar.

Gaseinschlüsse, die bei isocyanathaltigen Dichtungsmassen Probleme bereiten werden bei der vorliegenden Erfindung vermieden. Die erfindungsgemäßen Massen eignen sich daher bevorzugt für die Anwendung als transparente Dichtungsmasse.

Im ausgehärteten Zustand weisen die erfindungsgemäßen Massen eine sehr gute Reißfestigkeit und Reißdehnung auf.

### Beispiele

| Abkürzungen | |
|---|---|
| BA | n-Butylacrylat |
| MSA | Maleinsäureanhydrid |
| MEMO | Methacryloxypropyltrimethoxysilan |
| MTMO | Mercaptopropyltrimethoxysilan |
| DBTL | Dibutylzinndilaurat |

### Herstellung der Copolymeren

### Copolymer E1

| Zulauf 1: | |
|---|---|
| 770 g | BA |
| 80 g | MSA |

| Zulauf 2: | |
|---|---|
| 130 g | BA |
| 20 g | MEMO |

| Zulauf 3: | |
|---|---|
| 30 g | tert.-Butylperoctoat |
| 130 g | Toluol |

Unter Inertgasatmosphäre wurde eine Vorlage, bestehend aus einer Lösung von 10 Gew.-% des Monomerenzulaufs I und 10 Gew.-% eines Initiatorzulaufs III sowie 550 g Toluol auf eine Reaktorinnentemperatur von 95°C gebracht und 10 min anpolymerisiert. Anschließend wurden die drei Zuläufe gestartet, wobei der Monomerzulauf I, bestehend aus den Acrylestermonomeren und ungesättigtem Anhydrid in 3 h, der Monomerzulauf II, bestehend aus Acrylestermonomeren und den Silanverbindungen in 1 h und der Initiatorzulauf III, bestehend aus 30 g tert.-Butylperoctoat und 130 g Toluol in 4 h zugefahren wurde. Nach beendeten Zuläufen wurde 3 h bei 95°C auspolymerisiert und das Lösemittel und restflüchtige Anteile im Vakuum abdestilliert.

Im Fall von Abmischungen mit dem Beschleuniger DBTL oder mit weiteren Copolymeren wurde die destillative Abtrennung des Lösungsmittels nach der Abmischung durchgeführt.

Die weiteren Copolymeren wurden wie oben beschrieben hergestellt (Zusammensetzung s. Tabelle 1).

**Tabelle 1**

| Zusammensetzung der Copolymere | | | | |
|---|---|---|---|---|
| Copolymer | Monomer Gew.-% | Si-Monomer Gew.-% | Si-Regler Gew.-% | K-Wert |
| V1* | 98 BA | 2 MEMO | - | 31 |
| E1 | 90 BA, 8 MSA | 2 MEMO | - | 30,5 |
| E2 | 88 BA, 8 MSA | 2 MEMO | 2 MTMO | 21,9 |
| E3 | 88 BA, 8 MSA | 2 MEMO | 2 MTMO | 21,9 |
| E4 | 88 BA, 8 MSA | 2 MEMO | 2 MTMO | 21,9 |
| E5 | 88 BA, 8 MSA | 2 MEMO | 2 MTMO | 21,9 |
| E6 | 92 BA, 4 MSA | 2 MEMO | 2 MTMO | 28,7 |
| A1*** | 92 BA, 8 MSA | | - | 37,0 |

| | | | | |
|---|---|---|---|---|
| * zum Vergleich | | | | |
| *** für Abmischungen (s.u.) | | | | |

### Anwendungstechnische Prüfung

Die Copolymere V1 und E1-E6 sowie Copolymermischungen im Gewichtsverhältnis 1:1 bzw. 2:1 wurden auf ihre Eignung als Dichtungsmasse geprüft.

Zur Bestimmung der Reißdehnung und Reißfestigkeit wurden aus den selbsthärtbaren Copolymeren und Mischungen 1 mm dicke Filme durch Auftragen auf Silikonpapier hergestellt, die 6 Monate unter Normklima (23°C, 50 % Luftfeuchtigkeit) gelagert wurden. Anschließend wurden aus den Filmen Probekörper ausgestanzt, wonach die Reißdehnung und Reißfestigkeit nach DIN 53 504 bei einer Vorschubgeschwindigkeit von 100 mm/min gemessen.

**Tabelle 2**

| Copolymer bzw. Mischung | Zusatz DBTL Gew.-%* | Reißfestigkeit N/mm² | Reißdehnung % |
|---|---|---|---|
| V1 | - | 0,092 | 147 |
| E1 | - | 0,198 | 177 |
| E2 | - | 0,153 | 187 |
| E3 | 0,2 | 0,186 | 171 |
| E4 | 0,6 | 0,192 | 164 |
| E5 | 0,8 | 0,199 | 162 |
| E6 | - | 0,142 | 191 |
| E2/A1 (1:1) ** | 0,2 | 0,356 | 323 |
| E2/A1 (2:1) ** | 0,2 | 0,486 | 363 |

| | | | |
|---|---|---|---|
| * bezogen auf Copolymer bzw. Mischung | | | |
| ** erfindungsgemäß | | | |

## Patentansprüche

1. Im wesentlichen isocyanatfreie, ketimin- und aldiminfreie, einkomponentige, durch Einwirkung von Luftfeuchtigkeit selbsthärtende Dichtungs-, Klebstoff- oder Beschichtungsmassen, enthaltend ein Gemisch von Copolymeren, enthaltend
5 - 95 Gew.-%, bezogen auf das Gemisch, eines Copolymeren B), aufgebaut aus
50 - 99,9 Gew.-% eines C₁-C₁₆-Alkyl(meth)acrylats oder Vinylesters von Carbonsäuren mit 1 bis 20 C-Atomen a),
0 - 20 Gew.-% eines ungesättigten Carbonsäureanhydrids b)
0,1 - 10 Gew.-% einer zur Hydrolyse befähigten Si-enthaltenden Verbindung c) und
0 - 40 Gew.-% einer weiteren, copolymerisierbaren ungesättigten Verbindung d)
und
5 - 95 Gew.-%, bezogen auf das Gemisch, eines Copolymeren C), aufgebaut aus
50 - 99,9 Gew.-% eines C₁-C₁₆-Alkyl(meth)acrylats oder Vinylesters von Carbonsäuren mit 1 bis 20 C-Atomen a),
0,1 - 20 Gew.-% eines ungesättigten Carbonsäureanhydrids b)
0 - 10 Gew.-% einer zur Hydrolyse befähigten Si-enthaltenden Verbindung c) und
0 - 40 Gew.-% einer weiteren, copolymerisierbaren ungesättigten Verbindung d)
wobei der K-Wert gemessen nach DIN 53 726 eines der Copolymeren B) oder C) 12 bis 40 und des anderen Copolymeren 30 bis 70 beträgt und der K-Wert der beiden Copolymeren sich mindestens um 5 K-Wert-Einheiten unterscheidet.

2. Unter Einwirkung von Luftfeuchtigkeit selbsthärtendes Gemisch von Copolymeren, enthaltend, jeweils bezogen auf das Gemisch,
5 - 95 Gew.-% des Copolymeren B) und
5 - 95 Gew.-% des Copolymeren C)
wobei der K-Wert gemessen nach DIN 53 726 eines der Copolymeren B) oder C) 12 bis 40 und des anderen Copolymeren 30 bis 70 beträgt und der K-Wert der beiden Copolymeren sich mindestens um 5 K-Wert-Einheiten unterscheidet.

3. Dichtungs-, Klebstoff- oder Beschichtungsmassen bzw. Copolymergemisch gemäß Anspruch 1 oder 2, dadurch gekennzeichnet, daß es sich bei c) um Verbindungen der allgemeinen Formeln 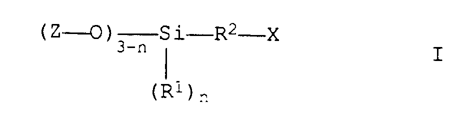 oder 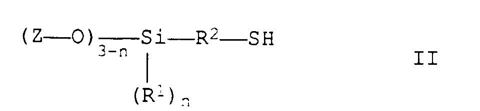 oder deren Gemische handelt, wobei
R¹ für eine C₁-C₁₈-Alkylgruppe oder eine Phenylgruppe, R² für eine C₁-C₁₈-Alkylengruppe, eine Cyclohexylengruppe oder Phenylengruppe, Z für eine C₁-C₁₈-Alkylgruppe oder eine Phenylgruppe, X für eine radikalisch copolymerisierbare Gruppe und n für 0, 1 oder 2 steht.

4. Dichtungs-, Klebstoff- oder Beschichtungsmassen oder Copolymergemische nach einem der Ansprüche 1 bis 3, enthaltend zusätzlich Dialkylzinndicarboxylate zur Beschleunigung der Selbsthärtung durch Einwirkung von Luftfeuchtigkeit.

5. Verwendung von Massen, enthaltend ein Gemisch von Copolymeren B) und C) gemäß Anspruch 2 als durch Einwirkung von Luftfeuchtigkeit selbsthärtende Beschichtungs-, Klebstoff- oder Beschichtungsmassen.

## Claims

1. An essentially isocyanate-free, ketimine-free and aldimine-free, one-component sealing, adhesive or coating material which is self-curable under the action of atmospheric humidity, containing a mixture of copolymers comprising
5-95% by weight, based on the mixture, of a copolymer B), composed of
50-99.9% by weight of a C₁-C₁₆-alkyl (meth)acrylate or vinyl ester of carboxylic acids of 1 to 20 carbon atoms a),
0-20% by weight of an unsaturated carboxylic anhydride b) 0.1-10% by weight of an Si-containing compound c) capable of undergoing hydrolysis and
0-40% by weight of a further, copolymerizable unsaturated compound d)
and
5-95% by weight, based on the mixture, of a copolymer C) composed of
50-99.9% by weight of a C₁-C₁₆-alkyl (meth)acrylate or vinyl ester of carboxylic acids of 1 to 20 carbon atoms a),
0.1-20% by weight of an unsaturated carboxylic anhydride b),
0-10% by weight of an Si-containing compound c) capable of undergoing hydrolysis and
0-40% by weight of a further, copolymerizable unsaturated compound d),
the K value of one of the copolymers B) or C) being from 12 to 40 and that of the other copolymer being from 30 to 70 and the K values of the two copolymers differing by at least 5 K value units, where the K value is measured according to DIN 53,726.

2. A copolymer blend which is self-curable under the action of atmospheric humidity and contains, based in each case on the blend,
5-95% by weight of copolymer B) and
5-95% by weight of copolymer C),
the K value of one of the copolymers B) or C) being from 12 to 40 and that of the other copolymer being from 30 to 70 and the K values of the two copolymers differing by at least 5 K value units, where the K value is measured according to DIN 53,726.

3. The sealing, adhesive or coating material or copolymer blend as claimed in claim 1 or 2, wherein c) is a compound of the formula 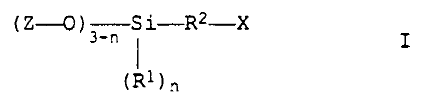 or 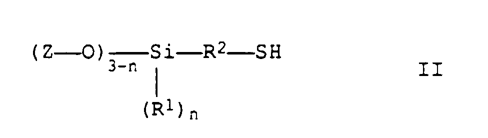 or mixtures thereof, where R¹ and Z are each C₁-C₁₈-alkyl or phenyl, R² is C₁-C₁₈-alkylene, cyclohexylene or phenylene, X is a group capable of undergoing free radical copolymerization and n is 0, 1 or 2.

4. A sealing, adhesive or coating material or copolymer mixture as claimed in any of claims 1 to 3, additionally containing a dialkyltin dicarboxylate for accelerating the self-curing under the action of atmospheric humidity.

5. Use of the material containing a mixture of copolymers B) and C), as claimed in claim 2, as a sealing, adhesive or coating material which is self-curable under the action of atmospheric humidity.

## Revendications

1. Matières adhésives, de revêtement ou d'étanchéité à un seul composant, pratiquement exemptes d'isocyanates, exemptes de cétimines et d'aldimines, autodurcissables sous l'effet de l'humidité de l'air, contenant un mélange de copolymères, qui contiennent
5 - 95 % en poids, par rapport au mélange, d'un copolymère B) composé de
50 - 99,9 % en poids d'un (méth)acrylate d'alkyle en C₁-C₁₆ ou d'un ester vinylique d'acides carboxyliques ayant de 1 à 20 atomes de carbone a),
0 - 20 % en poids d'un anhydride d'acide carboxylique insaturé b),
0,1 - 10 % en poids d'un composé silicié apte à l'hydrolyse c) et
0 - 40 % en poids d'un autre composé insaturé copolymérisable d)
et
5 - 95 % en poids, par rapport au mélange, d'un copolymère C) composé de
50 - 99,9 % en poids d'un (méth)acrylate d'alkyle en C₁-C₁₆ ou d'un ester vinylique d'acides carboxyliques ayant de 1 à 20 atomes de carbone a),
0,1 - 20 % en poids d'un anhydride d'acide carboxylique insaturé b),
0 - 10 % en poids d'un composé silicié apte à l'hydrolyse c) et
0 - 40 % en poids d'un autre composé insaturé copolymérisable d),
l'indice K mesuré selon DIN 53 726 d'un des copolymères B) et C) allant de 12 à 40 et celui de l'autre copolymère allant de 30 à 70, et les indices K des deux copolymères différant l'un de l'autre d'au moins 5 unités d'indice K.

2. Mélange de copolymères autodurcissable sous l'effet de l'humidité de l'air, contenant, dans chaque cas par rapport au mélange,
5 - 95 % en poids du copolymère B) et
5 - 95 % en poids du copolymère C)
l'indice K mesuré selon DIN 53 726 d'un des copolymères B) et C) allant de 12 à 40 et celui de l'autre copolymère allant de 30 à 70, et les indices K des deux copolymères différant l'un de l'autre d'au moins 5 unités d'indice K.

3. Matières adhésives, d'étanchéité ou de revêtement, ou mélange de copolymères selon la revendication 1 ou 2, caractérisés par le fait qu'en ce qui concerne c), il s'agit de composés de formules générales 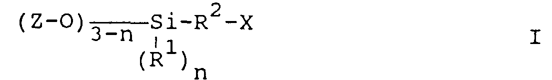 ou 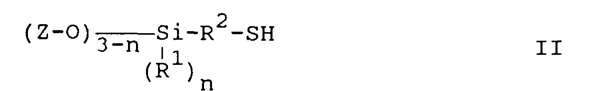 ou de mélanges de ceux-ci,
R¹ représentant un groupe alkyle en C₁-C₁₈ ou le groupe phényle, R² représentant un groupe alkylène en C₁-C₁₈, le groupe cyclohexylène ou phénylène, Z représentant un groupe alkyle en C₁-C₁₈ ou le groupe phényle, X représentant un groupe apte à la copolymérisation radicalaire, et n représentant 0, 1 ou 2.

4. Matières adhésives, d'étanchéité ou de revêtement, ou mélanges de copolymères selon l'une des revendications 1 à 3, contenant en outre des dicarboxylates de dialkylétain pour l'accélération de l'autodurcissement sous l'effet de l'humidité de l'air.

5. Utilisation de matières contenant un mélange de copolymères B) et C) selon la revendication 2, en tant que matières adhésives, d'étanchéité ou de revêtement.
